# EUROPÄISCHE PATENTSCHRIFT

(11) **EP 2 751 343 B1**
(45) Veröffentlichungstag und Bekanntmachung des Hinweises auf die Patenterteilung: **23.03.2016**
(21) Anmeldenummer: 11717223.9
(22) Anmeldetag: 21.04.2011
(51) Int. Cl.: E02D 27/42

(54) **WINDENERGIEANLAGEN-FUNDAMENT UND WINDENERGIEANLAGE**
WIND POWER PLANT FOUNDATION AND WIND POWER PLANT
SEMELLE D'ÉOLIENNE ET ÉOLIENNE

(30) Priorität: 21.04.2010 DE 102010028038
(43) Veröffentlichungstag der Anmeldung: 09.07.2014
(73) Patentinhaber: Wobben Properties GmbH, 26607 Aurich (DE)
(72) Erfinder: SCHACKNIES, Meik, 21698 Harsefeld (DE); SCHADE, Markus, 50354 Hürth (DE); WOBBEN, Aloys, 26607 Aurich (DE)
(74) Vertreter: Eisenführ Speiser
(86) Internationale Anmeldenummer: PCT/EP2011/056408
(87) Internationale Veröffentlichungsnummer: WO 2011/131751

(56) Entgegenhaltungen:
- WO-A1-03/031733
- WO-A2-2009/103475

## Beschreibung

Die vorliegende Erfindung betrifft ein Windenergieanlagen-Fundament und eine Windenergieanlage.

Ein Fundament einer Windenergieanlage besteht im Wesentlichen aus Beton und einer Stahlbewehrung. Typischerweise wird ein unteres (Stahl-) Turmsegment platziert und eine Bewehrung mit Stahlstäben in radialer und tangentialer Richtung vorgesehen. Dabei können die oberen Radialstäbe durch Löcher im unteren Turmsegment zur Aufnahme von Querzugspannungen geführt werden. Anschließend kann das Fundament mit Beton aufgefüllt werden. Die Bewehrung kann neben den Radialstäben auch umlaufende Stäbe oder vertikale Stäbe aufweisen.

Beim Betrieb einer Windenergieanlage können sowohl Zug- als auch Druckkräfte auf das untere Turmsegment, die Bewehrung und den Beton wirken. Insbesondere bei Zugkräften (die beispielsweise durch eine Turmdehnung hervorgerufen werden) kann es zu einer Fehleinleitung der Last und zu einer Beschädigung des Betons im Bereich der Löcher des Turmsegments kommen.

Um dieses Problem zu beheben, wird gemäß dem Stand der Technik ein Gummischlauch als Ummantelung für die Bewehrung innerhalb der Turmwandung verwendet.

Als allgemeiner Stand der Technik wird auf DE 10 2008 010 660 B3 und DE 102 26 996 A1 verwiesen.

WO 2009/103475 A1 zeigt ein Fundament einer Windenergieanlage mit einer Bewehrung aus einer Mehrzahl von Stahlstäben. Ein unteres Segment wird mit einer Mehrzahl von Löchern in einer Wandung des Turmsegmentes zur Aufnahme einer Mehrzahl von Radialstäben der Bewehrung vorgesehen. Ferner ist ein Betonkörper, der die Bewehrung und einen unteren Abschnitt des Turmsegments bedeckt, vorgesehen.

WO 03/031733 zeigt ein Fundament einer Windenergieanlage mit einem Fundamentsegment, welches eine Mehrzahl von Löchern aufweist.

Es ist somit eine Aufgabe der vorliegenden Erfindung, ein Windenergieanlagen-Fundament vorzusehen, welches eine Beschädigung des Fundaments durch Zugkräfte verringert.

Diese Aufgabe wird durch ein Windenergieanlagen-Fundament gemäß Anspruch 1 sowie durch eine Windenergieanlage gemäß Anspruch 5 gelöst.

Das Windenergieanlagen-Fundament gemäß der Erfindung weist somit eine Bewehrung aus einer Mehrzahl von Radialstahlstäben sowie ein unteres Turmsegment mit einer Mehrzahl von Löchern in der Wandung des Turmsegments zur Aufnahme von Stäben oder Radialstäben oder zum Durchstecken von Radialstäben auf. Ferner ist ein Betonkörper vorgesehen, der die Bewehrung und einen unteren Abschnitt des Turmsegments bedeckt. Das Fundament weist eine Mehrzahl von Haltern zum Halten von Stäben oder Radialstäben der Bewehrung auf. Der Halter weist einen oberen Bügel zur Befestigung am Turmsegment und einen unteren Fuß zur Aufnahme von Stäben oder Radialstäben der Bewehrung auf. Die Länge des Halters ist variierbar ausgestaltet.

Somit kann der Halter derart eingestellt werden, dass der Fuß einen Stab der Bewehrung aufnimmt, auf welchem Radialstäbe vorgesehen sind, welche durch die Löcher in der Wandung des Turmsegments hindurch reichen. Die Halter können dabei derart eingestellt sein, dass die Radialstäbe, welche durch die Löcher in der Wandung des Turmsegments hindurch reichen, nicht die Wandung des Turmsegments berühren.

Die Bewehrung kann auch Stahlstäbe in tangentialer Richtung bzw. ringförmig ausgestaltete Stahlstäbe aufweisen.

Gemäß einem Aspekt der vorliegenden Erfindung kann der Halter an einem Flansch am oberen Ende des Turmsegments befestigt werden. Der obere Bügel weist ein Langloch auf. Am zweiten Ende des Bügels ist der Fuß befestigt.

Gemäß einem weiteren Aspekt der vorliegenden Erfindung weist der Fuß Langlöcher auf, welche ein Einstellen der Länge des Halters ermöglichen.

Gemäß einem weiteren Aspekt der vorliegenden Erfindung sind die Löcher in den Wandungen des Turmsegments oval oder als Langloch ausgestaltet.

Die Erfindung betrifft ebenfalls eine Windenergieanlage mit einem Turm und einem Fundament für diesen Turm, wobei das Fundament dem oben beschriebenen Windenergieanlagen-Fundament entsprechen kann.

Die Erfindung betrifft ebenfalls ein Verfahren zur Montage einer Windenergieanlage und insbesondere eines Fundaments einer Windenergieanlage. Hierbei wird ein unteres Turmsegment vorgesehen und eine Bewehrung mit Radialstahlstäben und Stahlstäben in tangentialer Richtung wird vorgesehen, wobei einige der Radialstäbe durch Löcher in der Wandung des Turmsegments hindurch reichen. Ferner werden Halter mit einem oberen Bügel an dem einen Ende des Turmsegments vorgesehen. Der Halter weist einen unteren Fuß auf, welcher zur Aufnahme eines Stahlstabes oder Radialstabes dient. Die Länge des Halters wird derart eingestellt, dass die Radialstäbe durch die Löcher in der Wandung des Turmsegments hindurch reichen können, ohne dabei die Wandung des Turmsegments zu berühren.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines Fundaments einer Windenergieanlage gemäß der Erfindung,
- Fig. 2: zeigt eine schematische Darstellung eines Halters gemäß einem ersten Ausführungsbeispiel der Erfindung, und
- Fig. 3: zeigt eine schematische Darstellung eines Fundaments einer Windenergleanlage gemäß einem zweiten Ausführungsbeispiel.

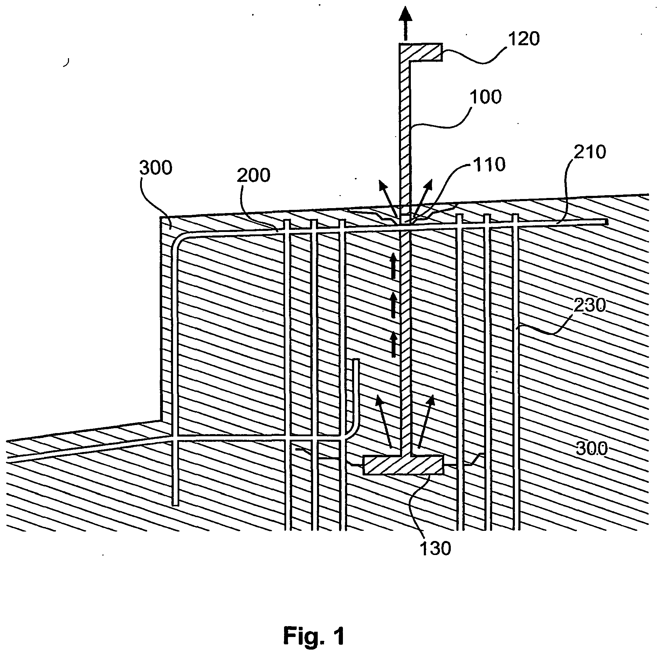

Fig. 1 zeigt eine schematische Darstellung eines Fundaments einer Windenergieanlage gemäß der Erfindung. Ein unteres Turmsegment 100 wird platziert und anschließend wird eine Bewehrung mit Stahlstäben und Radialstäben 200 vorgesehen. Dann wird das Fundament mit Beton 300 aufgefüllt. Das untere Turmsegment 100 weist Löcher (z. B. ovale Löcher) 110 auf, durch welche Radialstäbe der Bewehrung geführt werden können. Dies kann zur Verbesserung der Statik des Fundaments erfolgen. Neben den Radialstäben 200 können ebenfalls umlaufende Stäbe oder vertikale Stäbe für die Bewehrung vorgesehen werden. Das untere Turmsegment ist vorzugsweise aus Stahl hergestellt und weist einen oberen Flansch 120 sowie einen unteren Flansch 130 auf, wobei der obere Flansch aus dem Fundament hervorragt und der untere Flansch 130 einbetoniert ist.

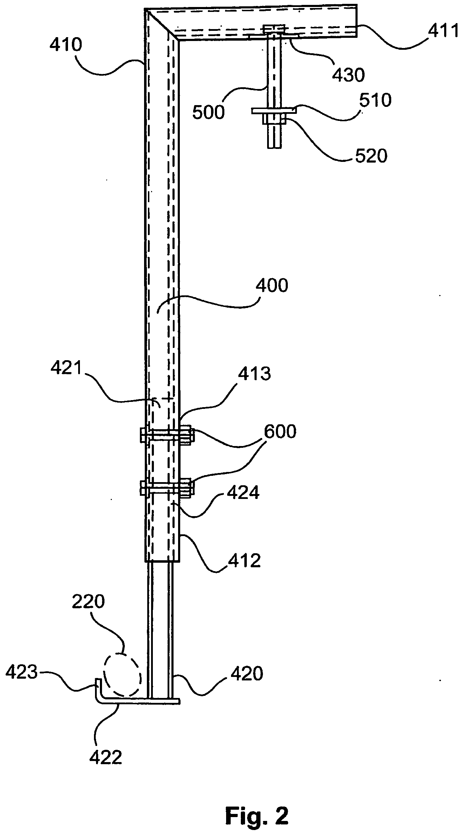

Fig. 2 zeigt eine schematische Darstellung eines Halters gemäß einem ersten Ausführungsbeispiel der Erfindung. Der Halter 400 weist einen oberen Bügel 410 und einen unteren Fuß 420 auf, die miteinander verbunden sind. Vorzugsweise können der obere Bügel 410 und der untere Fuß 420 verschiebbar zueinander ausgestaltet sein, so dass die Länge des Halters 400 variierbar ist.

Der obere Bügel 410 weist ein erstes und zweites Ende 411, 412 auf, wobei das erste Ende 411 des Bügels 410 zum Befestigen an beispielsweise einem oberen Flansch 120 des Turmsegments 100 ausgestaltet ist. An dem zweiten Ende 412 des Bügels 410 kann der untere Fuß 420 befestigt werden. Das erste Ende 411 des Bügels 410 kann abgewinkelt ausgestaltet sein und mindestens ein Langloch 430 aufweisen, so dass das abgewinkelte Ende 411 an dem Flansch 120 des Turmsegments 100 beispielsweise mittels Schrauben und Muttern befestigt werden kann. Der untere Fuß 420 weist ein erstes und zweites Ende 421, 422 auf, wobei das erste Ende 421 des Fußes 420 an dem zweiten Ende 412 des oberen Bügels 410 befestigt werden kann. Hierbei können entweder am ersten Ende 421 des Fußes 420 oder am zweiten Ende 412 des Bügels 410 Langlöcher vorgesehen sein, so dass der Bügel 410 und der Fuß 420 miteinander befestigt werden können und die Länge des Halters variierbar ist. Das zweite Ende 422 des Fußes 420 ist abgewinkelt ausgestaltet und kann optional ein nach oben gebogenes Ende aufweisen. Das zweite Ende 422 des unteren Fußes 420 dient hierbei zur Aufnahme von Stahlstäben oder Radialstäben der Bewehrung. Hierbei kann insbesondere ein innerer Ring aus mindestens einem Stahlstab um das Turmsegment herum aufgenommen werden. Auf oder an dem inneren Ring können die Radialstäbe der Bewehrung vorgesehen werden. Diese Radialstäbe erstrecken sich durch die Löcher 110 in der Wandung des unteren Turmsegments 100. Die Länge des Halters 400 ist dabei vorzugsweise derart eingestellt, dass die Radialstäbe nicht in Berührung stehen mit der Wandung des unteren Turmsegments.

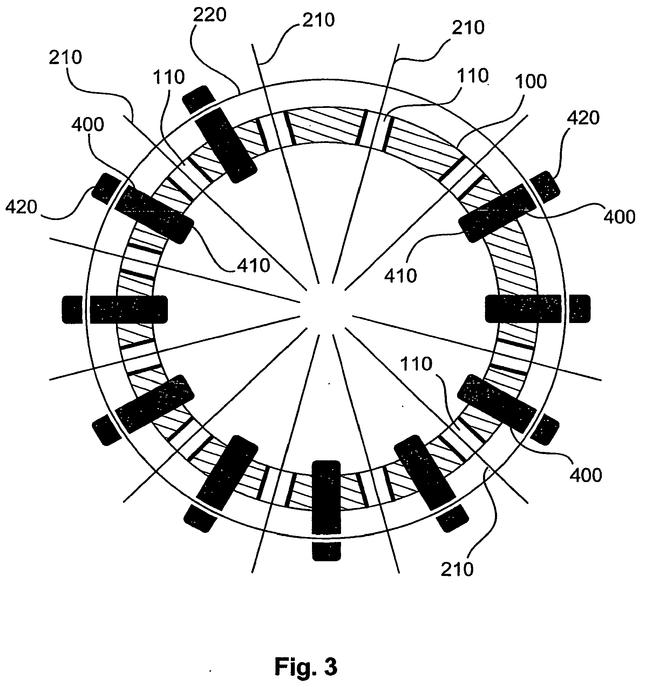

Fig. 3 zeigt eine schematische Darstellung eines Fundaments einer Windenergieanlage gemäß einem zweiten Ausführungsbeispiel. Hier ist insbesondere das untere Turmsegment 100 mit den Löchern 110 gezeigt. Durch die Löcher 110 sind Radialstäbe 210 der Bewehrung vorgesehen. Um das Turmsegment herum ist mindestens ein Ring 220 aus einem Stahlstab vorgesehen. Dieser Ring 220 kann unterhalb der Mehrzahl der Radialstäbe 110 vorgesehen sein. Ferner ist eine Mehrzahl von Haltern 400 (beispielsweise Halter gemäß dem ersten Ausführungsbeispiel) mit dem ersten Ende am Turmsegment befestigt. Die zweiten Enden der Halter dienen dazu, den Ring 220 aufzunehmen. Vorzugsweise wird die Länge der Halter derart eingestellt, dass die auf dem Ring 220 vorgesehenen Radialstäbe 210 sich durch die Löcher 110 erstrecken, ohne dabei die Wandung des Turmsegments zu berühren.

Wenn der Beton in das Fundament gegossen wird, kann der Beton solange aufgefüllt werden, bis die Bewehrung bedeckt ist. Somit wird also auch der untere Fuß des Halters mit einbetoniert. Die oberen Bügel des Halters können jedoch weiterverwendet werden. Hierzu muss lediglich der untere Fuß abgetrennt (z. B. abgeflext) werden. Somit sind die oberen Bügel wiederverwendbar.

Das oben beschriebene untere Turmsegment ist vorzugsweise ein Stahl-Turmsegment.

## Patentansprüche

1. Windenergieanlagen-Fundament, mit
einer Bewehrung aus einer Mehrzahl von Stahlstäben und Radialstahlstäben (200),
einem unteren Turmsegment (100) mit einer Mehrzahl von Löchern (110) in einer Wandung des Turmsegmentes zur Aufnahme einer Mehrzahl von Radialstäben (200) der Bewehrung,
einem Betonkörper (300), der die Bewehrung und einen unteren Abschnitt des Turmsegments (100) bedeckt, und
einer Mehrzahl von Haltern (400) zum Halten von Stäben oder Radialstäben (200),
wobei die Halter (400) jeweils einen oberen Bügel (430) zur Befestigung am oberen Abschnitt des Turmsegments (100) und einen unteren Fuß (420) zur Aufnahme der Stäbe oder Radialstäbe (200) der Bewehrung aufweist,
wobei die Länge des Halters (400) variierbar ist.

2. Windenergieanlagen-Fundament nach Anspruch 1, wobei der Bügel (430) des Halters (400) an einem oberen Flansch (120) eines unteren Turmsegmentes (100) befestigbar ist, wobei der obere Bügel (430) an seinem ersten Ende ein Langloch aufweist und an seinem zweiten Ende mit dem unteren Fuß befestigt ist.

3. Windenergieanlagen-Fundament nach Anspruch 1 oder 2, wobei der untere Fuß oder das zweite Endes des Bügels Langlöcher zum Einstellen der Länge des Halters aufweisen.

4. Windenergieanlagen-Fundament nach einem der Ansprüche 1 bis 3, wobei die Löcher in der Wandung des Turmsegments kreisrund, oval oder als Langloch ausgestaltet sind.

5. Windenergieanlage, mit
einem Fundament nach einem der Ansprüche 1 bis 4, und
einem Turm auf dem Fundament.

6. Verfahren zur Montage eines Windenergieanlagen-Fundaments, mit den Schritten:
Vorsehen eines unteren Turmsegments (100),
Vorsehen einer Bewehrung mit einer Mehrzahl von Stahlstäben und Radialstahlstäben (200), wobei die Radialstäbe durch Löcher in der Wandung des Turmsegments (100) hindurch reichen,
Vorsehen einer Mehrzahl von Haltern (400) mit einem oberen Bügel (430) zur Befestigung an einem Ende des Turmsegments (100) und einem unteren Fuß (420) zur Aufnahme eines Stabes oder Radialstabes (200) der Bewehrung,
Einstellen der Länge des Halters (400), so dass die Radialstäbe (200) durch die Löcher in der Wandung des Turmsegments (100) hindurch reichen, ohne dabei die Wandung des Turmsegments (100) zu berühren.

## Claims

1. A wind power installation foundation comprising
a reinforcement comprising a plurality of steel bars and radial steel bars (200),
a lower pylon segment (100) having a plurality of holes (110) in a wall of the pylon segment for receiving a plurality of radial bars (200) of the reinforcement,
a concrete body (300) which covers the reinforcement and a lower portion of the pylon segment (100), and
a plurality of holders (400) for holding bars or radial bars (200),
wherein the holders (400) each have an upper bracket (430) for fixing to the upper portion of the pylon segment (100) and a lower foot (420) for receiving the bars or radial bars (200) of the reinforcement,
wherein the length of the holder (400) is variable.

2. A wind power installation foundation according to claim 1 wherein the bracket (430) of the holder (400) can be fixed to an upper flange (120) of a lower pylon segment (100), wherein the upper bracket (430) has a slot at its first end and is fixed at its second end to the lower foot.

3. A wind power installation foundation according to claim 1 or claim 2 wherein the lower foot or the second end of the bracket have holes for adjustment of the length of the holder.

4. A wind power installation foundation according to one of claims 1 to 3 wherein the holes in the wall of the pylon segment are circular, oval or in the form of a slot.

5. A wind power installation comprising
a foundation according to one of claims 1 to 4, and
a pylon on the foundation.

6. A method of setting up a wind power installation foundation comprising the steps:
providing a lower pylon segment (100),
providing a reinforcement comprising a plurality of steel bars and radial steel bars (200), wherein the radial bars extend through holes in the wall of the pylon segment (100),
providing a plurality of holders (400) comprising an upper bracket (430) for fixing to an end of the pylon segment (100) and a lower foot (420) for receiving a bar or radial bar (200) of the reinforcement, and
adjusting the length of the holder (400) so that the radial bars (200) extend through the holes in the wall of the pylon segment (100) without in that case touching the wall of the pylon segment (100).

## Revendications

1. Socle d'éolienne, comprenant
une armature composée d'une pluralité de barres en acier et de barres en acier radiales (200),
un segment de tour inférieur (100) pourvu d'une pluralité de trous (110) dans une paroi du segment de tour servant à recevoir une pluralité de barres radiales (200) de l'armature,
un corps en béton (300), qui recouvre l'armature et une section inférieure du segment de tour (100), et
une pluralité de dispositifs de maintien (400) servant à maintenir des barres ou des barres radiales (200) ,
sachant que les dispositifs de maintien (400) présentent respectivement un étrier supérieur (430) destiné à être fixé au niveau de la section supérieure du segment de tour (100) et un pied inférieur (420) servant à recevoir les barres ou les barres radiales (200) de l'armature,
sachant que la longueur du dispositif de maintien (400) est variable.

2. Socle d'éolienne selon la revendication 1, sachant que l'étrier (430) du dispositif de maintien (400) peut être fixé au niveau d'une bride supérieure (120) d'un segment de tour inférieur (100), sachant que l'étrier supérieur (430) présente, au niveau de sa première extrémité, un trou oblong et est fixé, au niveau de sa deuxième extrémité, par le pied inférieur.

3. Socle d'éolienne selon la revendication 1 ou 2, sachant que le pied inférieur ou la deuxième extrémité de l'étrier présente des trous oblongs servant à régler la longueur du dispositif de maintien.

4. Socle d'éolienne selon l'une quelconque des revendications 1 à 3, sachant que les trous dans la paroi du segment de tour sont configurés de manière circulaire, de manière ovale ou sous la forme de trous oblongs.

5. Eolienne, comprenant
un socle selon l'une quelconque des revendications 1 à 4, et
une tour sur le socle.

6. Procédé servant au montage d'un socle d'éolienne, comprenant les étapes consistant à :
prévoir un segment de tour inférieur (100) ;
prévoir une armature pourvue d'une pluralité de barres en acier et de barres en acier radiales (200), sachant que les barres radiales passent à travers des trous dans la paroi du segment de tour (100) ;
prévoir une pluralité de dispositifs de maintien (400) pourvus d'un étrier supérieur (430) destiné à être fixé au niveau d'une extrémité du segment de tour (100) et d'un pied inférieur (420) servant à recevoir une barre ou une barre radiale (200) de l'armature ;
régler la longueur du dispositif de maintien (400) de sorte que les barres radiales (200) passent à travers les trous dans la paroi du segment de tour (100) sans toucher ce faisant la paroi du segment de tour (100) .
